# EUROPÄISCHE PATENTSCHRIFT

(11) **EP 2 599 178 B1**
(45) Veröffentlichungstag und Bekanntmachung des Hinweises auf die Patenterteilung: **28.04.2021**
(21) Anmeldenummer: 11818909.1
(22) Anmeldetag: 01.08.2011
(51) Int. Cl.: H02H 3/20, H02H 9/04

(54) **SCHUTZSCHALTUNG**
PROTECTIVE CIRCUIT
CIRCUIT DE PROTECTION

(30) Priorität: 30.07.2010 DE 102010032948
(43) Veröffentlichungstag der Anmeldung: 05.06.2013
(73) Patentinhaber: Hottinger Brüel & Kjaer GmbH, 64293 Darmstadt (DE)
(72) Erfinder: VOELGER, Reinhard, 64846 Gross-Zimmern (DE)
(74) Vertreter: Staudte, Ralph
(86) Internationale Anmeldenummer: PCT/DE2011/001542
(87) Internationale Veröffentlichungsnummer: WO 2012/025088

(56) Entgegenhaltungen:
- JP-A- 2002 218 645
- US-A- 4 586 104
- US-A1- 2009 116 158
- US-A1- 2009 243 870
- "Understanding Modern Power MOSFETs Fairchild Power Seminar 2006 2 Session Objectives", Fairchild power seminar 2006, 1 January 2006 (2006-01-01), pages 1-35, XP055105660, Retrieved from the Internet: URL:http://www.fairchildsemi.com/Assets/zS ystem/documents/collateral/onlineSeminars/ Understanding-Modern-Power-MOSFETs-PPT.pdf [retrieved on 2014-03-05]

## Beschreibung

Die vorliegende Erfindung bezieht sich auf eine Schaltung zum Schutz vor Überspannungen.

Busse dienen generell zur Datenübertragung zwischen mehreren Teilnehmern über einen gemeinsamen Übertragungsweg. Der Eindraht-Bus bzw. 1-Wire-Bus zeichnet sich dadurch aus, dass eine serielle bidirektionale Datenübertragung und eine Energieversorgung von angeschlossenen Geräten bzw. Bausteinen über eine einzige Datenleitung erfolgen können, d.h. Eingangssignale, Ausgangssignale und eine Versorgungsspannung auf ein und derselben Datenleitung übertragen werden können. Zusätzlich zu der Datenleitung ist noch eine Masse-Leitung erforderlich.

Pro 1-Wire-Bus sind ein Master-Baustein und zumindest ein Slave-Baustein vorhanden. Als Master-Baustein kann eine Steuereinheit wie beispielsweise ein Mikrocontroller oder Personal Computer mit einem entsprechenden Adapter dienen, der mit einem passiven oder aktiven Pull-Up-Widerstand versehen ist. Es kann aber auch ein spezieller Master-Baustein wie beispielsweise der DS2482-100 oder der DS2482-800 von der Firma Maxim Integrated Products, Inc. verwendet werden. Bei den Slave-Bausteinen kann es sich z.B. um Sensoren wie Temperatur- oder Feuchtigkeitssensoren, Speicherbausteine, Analog-Digital-Wandier, digitale Potentiometer, Zeiterfassungs- und Echtzeituhren, Batterieschützer, -selektierer und -monitore etc. handeln. Die Betriebsspannung der Bausteine liegt generell zwischen 2,8 V und 6 V. Viele der Bausteine arbeiten mit einer Betriebsspannung, die zwischen 2,8 V und 5,5 V liegen darf. Bei einigen Bausteinen sind jedoch nur 3,0 V bis 3,7 V zugelassen.

Eine Besonderheit von 1-Wire-Geräten besteht darin, dass die Slave-Bausteine mit einer parasitären Spannung der Datenleitung versorgt werden können. Bei inaktiver Kommunikation, d.h. im Idle-State bzw. Ruhezustand, liegt die Datenleitung auf einem High-Level von z.B. 5V und lädt einen jeweiligen Speicherkondensator, der in jedem Slave-Baustein integriert ist. Dabei wird die Datenleitung mit Hilfe eines Pull-Up-Widerstands auf den High-Pegel gezogen. Während Phasen, in denen die Datenleitung auf einem Low-Pegel liegt, wird jeder Slave-Baustein aus seinem Speicherkondensator gespeist.

Eine Datenleitung eines 1-Wire-Busses arbeitet bei einem Potential von z.B. 3,3 V bidirektional und ist über einen Master-Baustein intern mit einem Pull-Up-Widerstand versehen. Ein versehentliches Anlegen einer Spannung an den Eingang bzw. Anschluss des Master-Bausteins (die Datenleitung), die mehr als ca. 0,5 V oberhalb seiner Versorgungsspannung liegt, d.h. einer Spannung von mehr als ca. Vcc + 0,5 V, führt zur Zerstörung des Master-Bausteins. Somit muss dieser vor einer derartigen Überspannung geschützt werden. Gleiches gilt für eine mit der Datenleitung verbundene Schaltung oder andere elektronische Funktionseinheit. Diese Problematik tritt nicht nur bei einem 1-Wire-Bus, sondern auch bei anderen bidirektionalen Bus-Systemen wie beispielsweise einem |²C-Bus oder einem RS485-Bus im Halbduplex-Betrieb auf.

Bislang bekannte Vorrichtungen zum Schutz vor positiven bzw. negativen Überspannungen wie beispielsweise eine in dem Dokument DE 199 16 685 A1 beschriebene Schutzschaltung arbeiten häufig mit einem Begrenzungs- bzw. Vorschaltwiderstand. Derartige Schutzschaltungen sind nicht für einen 1-Wire-Bus geeignet. Über den Vorschaltwiderstand würde eine entsprechende Spannung abfallen, so dass die an dem 1-Wire-Bus angeschlossenen Slave-Bausteine durch den Spannungsabfall an dem Vorschaltwiderstand zuwenig Versorgungsspannung erhalten würden.

Ähnliches gilt für Schutzschaltungen mit einer Zener-Diode bzw. Z-Diode, an der ebenfalls ein Spannungsabfall auftreten würde und die darüber hinaus keinen Schutz vor negativen Überspannungen bieten würde. Schutzschaltungen mit einer bidirektionalen Suppressor-Diode würden hingegen nur einen Schutz gegen Überspannungs-Transienten, jedoch nicht gegen länger andauernde Überspannungen ermöglichen. Mit einem Feldeffekttransistor realisierte Schutzschaltungen sind in einer positiv oder negativ spannungsbehafteten Leitung integriert, während mit zwei Feldeffekttransistoren realisierte Schutzschaltungen in einer positiv spannungsbehafteten Leitung integriert sind. Bei mit Feldeffekttransistoren realisierten Schutzschaltungen würde sich eine Bidirektionalität entweder nicht oder nur mit einer Richtungssteuerung verwirklichen lassen, wobei eine bidirektionale Schutzschaltung mit Richtungssteuerung nicht für die Verwendung in Verbindung mit einem 1-Wire-Bus geeignet ist.

Weitere bislang bekannte Schutzschaltungen kommen aus ähnlichen Gründen nicht für einen 1-Wire-Bus in Frage. Bei Schutzschaltungen mit einem Varistor würde beispielsweise über den Varistor eine entsprechende Spannung abfallen. Schutzschaltungen mit einem Thyristor, der durch einen aktiven Kurzschluss einer Versorgungsspannung eine Sicherung auslöst, würden nicht ohne Versorgungsspannung funktionieren und keinen Schutz vor negativen Überspannungen bieten.

Der nächstliegende Stand der Technik, Dokument US 2009/011658, offenbart eine Schaltung zum Schutz einer mit einer Datenleitung verbundenen elektronischen Einrichtung, mit einem vor der elektronischen Einrichtung in der Datenleitung angeordneten Analogschalter und einem Spannungsüberwacher zum Steuern des Analogschalters.

Es ist daher die Aufgabe der Erfindung, die vorstehend aufgeführten Nachteile des Standes der Technik zu beseitigen und eine Schutzschaltung bereitzustellen, die eine mit einer Datenleitung verbundene elektronische Funktionseinheit vor positiven und negativen Überspannungen schützen kann, wobei dies auch in einem Low-Power-Mode bzw. einer Energiesparbetriebsart und/oder wenn keinerlei Versorgungsspannung angelegt ist funktionieren soll. Dabei sollen eine Niederohmigkeit und eine Bidirektionalität der Datenleitung nicht beeinflusst werden.

Diese Aufgabe wird mit der Schaltung nach dem Anspruch 1 gelöst.

Gemäß der Erfindung wird eine Schaltung zum Schutz einer mit einer bidirektionalen Datenleitung verbundenen elektronischen Funktionseinheit vor positiven und negativen Überspannungen bereitgestellt. Die Schaltung umfasst einen vor der elektronischen Funktionseinheit in der Datenleitung angeordneten Analogschalter und einen Spannungsüberwacher, der zum Ansteuern des Analogschalters eingerichtet ist, wobei der Spannungsüberwacher zum Schließen des Analogschalters, falls keine Überspannung auftritt, und zum Öffnen des Analogschalters, falls eine Überspannung auftritt, eingerichtet ist.

Der Spannungsüberwacher überwacht die Datenleitung auf eine positive oder negative Überspannung hin und trennt mittels des Analogschalters die Datenleitung von der elektronischen Funktionseinheit, falls eine Überspannung auftritt. Der Analogschalter gewährleistet, dass eine Niederohmigkeit und eine Bidirektionalität der Datenleitung nicht beeinflusst werden. Da die Überspannung als Versorgungsspannung herangezogen werden kann, ist die Funktionalität der Schaltung auch in einer Energiesparbetriebsart und/oder wenn keinerlei Versorgungsspannung angelegt ist gesichert.

Gemäß der Erfindung weist der Spannungsüberwacher einen Komparator auf, der zum Ansteuern des Analogschalters über eine Ausgangsspannung des Komparators eingerichtet ist. In einem Normalbetrieb der Schaltung fällt der Ausgang des Komparators in eine positive Endlage. Falls eine Überspannung auftritt, so fällt der Ausgang des Komparators in eine negative Endlage. Somit wird ein zuverlässiges Umschalten des Analogschalters erreicht.

Gemäß einer Ausgestaltung der Erfindung weist der Spannungsüberwacher einen zwischen einem höheren Versorgungspotential des Komparators und einem Ausgang des Komparators angeordneten Pull-Up-Widerstand und/oder einen zwischen einem positiven Eingang des Komparators und dem Ausgang des Komparators angeordneten Mitkopplungswiderstand auf. Durch den Pull-Up-Widerstand wird sichergestellt, dass die Höhe der Ausgangsspannung des Komparators für ein sicheres Schalten des Analogschalters ausreicht. Durch den Mitkopplungswiderstand kann vermieden werden, dass bei geringen Schwankungen von an dem positiven Eingang und einem negativen Eingang des Komparators anliegenden Eingangsspannungen die Ausgangsspannung des Komparators zu häufig und irregulär umschaltet.

Gemäß einer weiteren Ausgestaltung der Erfindung weist der Spannungsüberwacher eine zwischen einem höheren Versorgungspotential des Komparators und einem niedrigeren Versorgungspotential des Komparators angeordnete Reihenschaltung aus einem Widerstand und zumindest einer in Durchlassrichtung angeordneten Diode auf, wobei die Reihenschaltung zum Einstellen einer an einem positiven Eingang des Komparators anliegenden Eingangsspannung an einem Verbindungspunkt zwischen dem Widerstand und der zumindest einen Diode eingerichtet ist. Da die an den zwei Dioden abfallende Spannung auch bei einer Anhebung des höheren Versorgungspotentials des Komparators nahezu konstant bleibt, wird die an dem positiven Eingang des Komparators anliegende Eingangsspannung auf einfache Weise annähernd konstant gehalten.

Gemäß einer weiteren Ausgestaltung der Erfindung weist der Spannungsüberwacher eine zwischen einem höheren Versorgungspotential des Komparators und einem niedrigeren Versorgungspotential des Komparators angeordnete Reihenschaltung aus zwei Widerständen auf, die zum Einstellen einer an einem negativen Eingang des Komparators anliegenden Eingangsspannung an einem Verbindungspunkt zwischen den zwei Widerständen eingerichtet ist. Die an dem negativen Eingang des Komparators anliegende Eingangsspannung steigt, wenn das höhere Versorgungspotential des Komparators und somit die an der Reihenschaltung aus den zwei Widerständen anliegende Spannung steigt. Sobald die an dem negativen Eingang des Komparators anliegende Eingangsspannung die an dem positiven Eingang des Komparators anliegende Eingangsspannung übersteigt, kippt der Ausgang des Komparators von einer positiven Endlage in eine negative Endlage. Dadurch wird ein zuverlässiges Öffnen des Analogschalters erreicht.

Gemäß der Erfindung weist der Spannungsüberwacher eine zwischen einem ersten Referenzpotential und einem höheren Versorgungspotential des Komparators in Durchlassrichtung angeordnete Diode auf, die zum Abtrennen des ersten Referenzpotentials, falls eine Überspannung auftritt, eingerichtet ist. So wird erreicht, dass die Überspannung als Versorgungsspannung für den Komparator verwendet wird.

Gemäß einer weiteren Ausgestaltung der Erfindung ist die zwischen dem ersten Referenzpotential und dem höheren Versorgungspotential des Komparators in Durchlassrichtung angeordnete Diode eine Schottky-Diode. Dadurch wird ein schnelles Abtrennen des ersten Referenzpotentials schon bei einer geringen Überspannung ermöglicht.

Gemäß einer weiteren Ausgestaltung der Erfindung weist der Spannungsüberwacher eine zwischen einem zweiten Referenzpotential und einem Versorgungspotential des Analogschalters in Durchlassrichtung angeordnete Diode auf, die zum Abtrennen des zweiten Referenzpotentials, falls eine Überspannung auftritt, eingerichtet ist. So wird erreicht, dass die Überspannung als Versorgungsspannung für den Analogschalter verwendet wird.

Gemäß einer weiteren Ausgestaltung der Erfindung ist die zwischen dem zweiten Referenzpotential und dem Versorgungspotential des Analogschalters in Durchlassrichtung angeordnete Diode eine Schottky-Diode. Dadurch wird ein schnelles Abtrennen des zweiten Referenzpotentials schon bei einer relativ geringen Überspannung ermöglicht.

Gemäß einer Ausgestaltung der Erfindung weist der Spannungsüberwacher eine zwischen einem höheren Versorgungspotential des Komparators und einem Versorgungspotential des Analogschalters in Durchlassrichtung angeordnete Diode auf, die zum Trennen des höheren Versorgungspotentials des Komparators und des Versorgungspotentials des Analogschalters, falls keine Überspannung auftritt, eingerichtet ist. Somit sind einerseits eine saubere Trennung der Versorgungspotentiale des Komparators und des Analogschalters in einem Normalbetrieb der Schaltung und andererseits eine Nutzung der Überspannung als Versorgungsspannung für sowohl den Komparator als auch den Analogschalter möglich.

Gemäß einer weiteren Ausgestaltung der Erfindung ist die zwischen dem höheren Versorgungspotential des Komparators und dem Versorgungspotential des Analogschalters angeordnete Diode eine Schottky-Diode. Dadurch wird ermöglicht, dass schon bei einer relativ geringen Überspannung schnell die Überspannung als Versorgungsspannung für den Analogschalter genutzt wird.

Gemäß einer weiteren Ausgestaltung der Erfindung weist die Schaltung eine vor dem Spannungsüberwacher angeordnete Brückenschaltung aus vier Dioden auf, die zum Gleichrichten einer Überspannung und zum Zuführen der gleichgerichteten Überspannung zu dem Spannungsüberwacher eingerichtet ist. Durch die Brückenschaltung wird die Schaltung intern nur mit positiver Spannung beaufschlagt und die gleichgerichtete Überspannung kann in jedem Fall als Versorgungsspannung herangezogen werden.

Gemäß einer weiteren Ausgestaltung der Erfindung sind die vier Dioden der Brückenschaltung Schottky-Dioden. Dadurch werden ein schnelles Umschalten der Dioden schon bei einer geringen Überspannung und eine zuverlässige Gleichrichtung der Überspannung ermöglicht.

Gemäß einer weiteren Ausgestaltung der Erfindung weist die Schaltung eine vor dem Analogschalter zwischen der Datenleitung und einer Masse-Leitung angeordnete bidirektionale Suppressor-Diode auf, die zum Begrenzen von positiven und negativen Überspannungen eingerichtet ist. Sie weist zudem eine vor einem Verbindungspunkt der Datenleitung und der bidirektionalen Suppressor-Diode in der Datenleitung angeordnete selbstrückstellende Sicherung auf, die zum Begrenzen eines durch die bidirektionale Suppressor-Diode fließenden Stroms eingerichtet ist. Die selbstrückstellende Sicherung ist in einem Normalbetrieb der Schaltung niederohmig und gewährleistet somit, dass die Datenleitung in dem Normalbetrieb der Schaltung niederohmig bleibt. Sie begrenzt den durch die bidirektionale Suppressor-Diode fließenden Strom und verhindert somit deren Zerstörung. Die Kombination aus der selbstrückstellenden Sicherung und der bidirektionalen Suppressor-Diode stellt eine Begrenzung von sowohl positiven als auch negativen Überspannungen in einem ersten Schritt sicher.

Gemäß einer weiteren Ausgestaltung der Erfindung weist die Schaltung eine zwischen einem höheren Versorgungspotential der elektronischen Funktionseinheit und einem niedrigeren Versorgungspotential der elektronischen Funktionseinheit angeordnete bidirektionale Suppressor-Diode auf, die zum Begrenzen von Überspannungs-Transienten bei der elektronischen Funktionseinheit eingerichtet ist. Die bidirektionale Suppressor-Diode sorgt dafür, dass bei schnellen Überspannungs-Transienten die elektronische Funktionseinheit keinen Schaden nimmt, bis der Spannungsbegrenzer zur Geltung kommt.

Die Erfindung wird nachfolgend anhand eines Ausführungsbeispiels in Verbindung mit einer schematischen Zeichnung näher erläutert. Es zeigt:

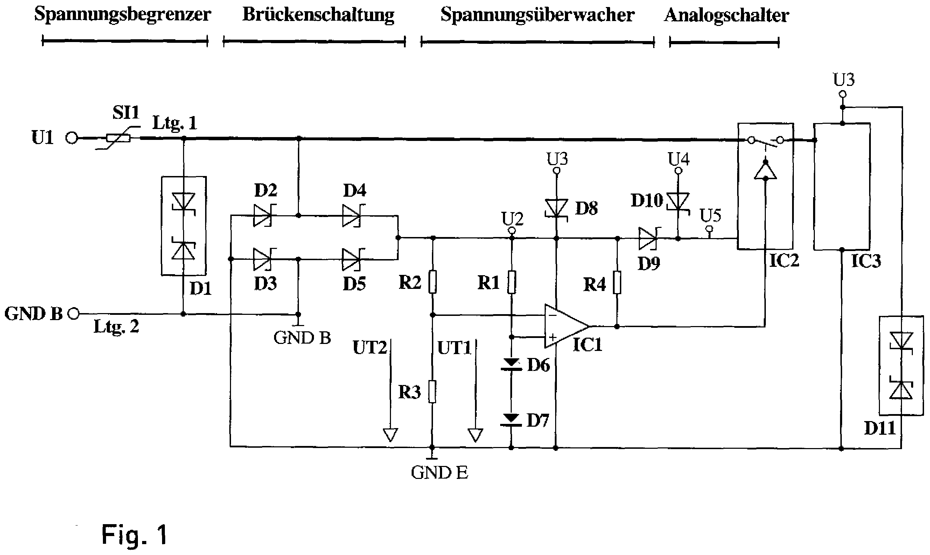

Fig. 1 eine beispielhafte Schaltung zum Schutz einer mit einer Datenleitung verbundenen elektronischen Funktionseinheit vor positiven und negativen Überspannungen.

Die Fig. 1 zeigt eine beispielhafte Schaltung zum Schutz einer mit einer Datenleitung Ltg. 1 verbundenen elektronischen Funktionseinheit IC3 vor positiven und negativen Überspannungen. Die elektronische Funktionseinheit IC3 kann ein Baustein, eine diskrete Schaltung oder eine integrierte Schaltung (IC) sein.

Bei der Datenleitung Ltg. 1 kann es sich beispielsweise um die Datenleitung eines Eindraht-Busses bzw. 1-Wire-Busses handeln, die bei einem Potential von z.B. U1 = 3,3 V bidirektional arbeiten kann. Neben der Datenleitung Ltg. 1 ist eine Masse-Leitung Ltg. 2 vorhanden, bei der es sich beispielsweise um die Masse-Leitung eines 1-Wire-Busses mit einem Potential von z.B. GND B handeln kann. Statt einem 1-Wire-Bus kann auch ein anderes bidirektionales Bus-System wie beispielsweise ein |²C-Bus oder ein RS485-Bus im Halbduplex-Betrieb zum Einsatz kommen.

Die elektronische Funktionseinheit IC3 kann z.B. ein Master-Baustein wie beispielsweise ein Mikrocontroller oder Personal Computer mit einem entsprechenden Adapter sein, der mit einem passiven oder aktiven Pull-Up-Widerstand versehen ist. Alternativ kann es sich um einen speziellen Master-Baustein wie z.B. den DS2482-100 oder den DS2482-800 von der Firma Maxim Integrated Products, Inc. handeln. Die elektronische Funktionseinheit IC3 kann auch ein beliebiger anderer Baustein, der Daten auf einer niederohmigen bidirektionalen Leitung sendet oder empfängt, sein. Es kann sich beispielsweise um eine feldprogrammierbare Gatteranordnung bzw. ein Field Programmable Gate Array (FPGA) handeln.

Die Schaltung umfasst einen Spannungsbegrenzer, eine Brückenschaltung und einen Spannungsüberwacher, deren einzelne Komponenten im Folgenden näher erläutert sind. Zudem sind noch ein Analogschalter IC2 in der Datenleitung Ltg. 1 vor der elektronischen Funktionseinheit IC3 sowie eine bidirektionale Suppressor-Diode D11 bei der elektronischen Funktionseinheit IC3 vorhanden.

Der Spannungsbegrenzer umfasst eine zwischen der Datenleitung Ltg. 1 und der Masse-Leitung Ltg. 2 angeordnete bidirektionale Suppressor-Diode D1. Diese kann positive und negative Überspannungen begrenzen und beispielsweise eine Durchbruchspannung von 6 V aufweisen. Der Spannungsbegrenzer umfasst ferner eine vor einem Verbindungspunkt der Datenleitung Ltg. 1 und der bidirektionalen Suppressor-Diode D1 in der Datenleitung Ltg. 1 angeordnete Auto-Fuse bzw. selbstrückstellende Sicherung SI1, die einen durch die bidirektionale Suppressor-Diode D1 fließenden Strom begrenzt. Sie kann beispielsweise für eine maximale Spannung von 30 V und eine Nennstromstärke von 50 mA ausgelegt sein. Derartige selbstrückstellende Sicherungen werden beispielsweise von der Firma Bourns, Inc. unter dem Markennamen Multifuse® vertrieben.

Die Brückenschaltung umfasst vier Dioden D2, D3, D4 und D5 wie z.B. Schottky-Dioden mit einer Durchbruchspannung von 40 V oder Silizium-Dioden. Anstelle von jeder der Dioden D2, D3, D4 und D5 kann auch jeweils ein Brückengleichrichter mit Silizium-Dioden oder ein Brückengleichrichter mit Schottky-Dioden als fertige Einheit vorgesehen sein. Die Brückenschaltung ist zwischen den Dioden D2 und D4 mit der Datenleitung Ltg. 1 verbunden, zwischen den Dioden D3 und D5 mit der Masse-Leitung Ltg. 2 verbunden, zwischen den Dioden D4 und D5 mit einem ein höheres Versorgungspotential U2 eines Komparators IC1 aufweisenden Eingang des Spannungsüberwachers verbunden und zwischen den Dioden D2 und D3 mit einem ein niedrigeres Versorgungspotential GND E des Komparators IC1 aufweisenden Eingang des Spannungsüberwachers verbunden.

Der Spannungsüberwacher umfasst den Komparator IC1, bei dem es sich z.B. um einen als Komparator geschalteten Operationsverstärker mit einer positiven Versorgungsspannung von bis zu Vcc = 35 V oder aber auch eine diskrete Schaltung handeln kann, eine zwischen dem höheren Versorgungspotential U2 des Komparators IC1 und dem niedrigeren Versorgungspotential GND E des Komparators IC1 angeordnete Reihenschaltung aus einem Widerstand R1 sowie zwei in Durchlassrichtung angeordneten Dioden D6 und D7, eine zwischen dem höheren Versorgungspotential U2 des Komparators IC1 und dem niedrigeren Versorgungspotential GND E des Komparators IC1 angeordnete Reihenschaltung aus zwei Widerständen R2 und R3 sowie einen zwischen dem höheren Versorgungspotential U2 des Komparators IC1 und einem Ausgang des Komparators IC1 angeordneten Pull-Up-Widerstand R4. Der Spannungsüberwacher umfasst zudem eine zwischen einem ersten Referenzpotential U3 und dem höheren Versorgungspotential U2 des Komparators IC1 in Durchlassrichtung angeordnete Diode D8, eine zwischen einem zweiten Referenzpotential U4 und einem Versorgungspotential U5 des Analogschalters IC2 in Durchlassrichtung angeordnete Diode D10 sowie eine zwischen dem höheren Versorgungspotential U2 des Komparators IC1 und dem Versorgungspotential U5 des Analogschalters IC2 in Durchlassrichtung angeordnete Diode D9.

Die Widerstände R1, R2, R3 und R4 können beispielsweise Widerstände mit einer jeweiligen Toleranz des Widerstandswerts von ±1 % und einem jeweiligen Temperaturkoeffizienten TK50, d.h. einer temperaturabhängigen Änderung des Widerstandswerts von 50 ppm / °C = 0,005 % / °C, sein. Die Dioden D6 und D7 können z.B. Silizium-Dioden sein. Anstelle der beiden Dioden D6 und D7 kann auch eine Zener-Diode vorgesehen sein. Die Dioden D8, D9 und D10 können beispielsweise Schottky-Dioden mit einer Durchbruchspannung von 40 V oder Silizium-Dioden sein. Anstelle von jeder der Dioden D8, D9 und D10 kann auch jeweils ein Brückengleichrichter mit Silizium-Dioden oder ein Brückengleichrichter mit Schottky-Dioden als fertige Einheit vorgesehen sein.

Bei dem Analogschalter IC2 kann es sich z.B. um einen elektronischen Schalter handeln, der mit Hilfe von Feldeffekttransistoren realisiert ist. Er kann beispielsweise eine positive Versorgungsspannung von bis zu Vcc = 35 V aufweisen und ist vor einem Anschluss der elektronischen Funktionseinheit IC3, mit dem die Datenleitung Ltg. 1 verbunden ist, in der Datenleitung Ltg. 1 angeordnet.

Die bidirektionale Suppressor-Diode D11 ist zwischen dem ersten Referenzpotential U3, das als höheres Versorgungspotential der elektronischen Funktionseinheit IC3 dient, und dem niedrigeren Versorgungspotential GND E des Komparators IC1, das als niedrigeres Versorgungspotential der elektronischen Funktionseinheit IC3 dient, angeordnet. Sie kann positive und negative Überspannungen begrenzen und beispielsweise eine Durchbruchspannung von 3,3 V aufweisen.

In einem Normalbetrieb der Schaltung ist die selbstrückstellende Sicherung SI1 unbelastet und somit niederohmig. Es tritt keine Überspannung auf, weder eine positive noch eine negative. Daher ist auch die bidirektionale Suppressor-Diode D1 gesperrt.

Der Komparator IC1 wird von dem ersten Referenzpotential U3 über die Diode D8 versorgt. Das höhere Versorgungspotential U2 des Komparators IC1 ist gegenüber dem ersten Referenzpotential U3 um eine Durchlassspannung der Diode D8 vermindert. Falls die Diode D8 eine Schottky-Diode ist, kann sie eine Durchlassspannung von z.B. 0,2 V aufweisen. Als höheres Versorgungspotential U2 des Komparators IC1 ergibt sich in diesem Fall U2 = U3 - 0,2 V.

Der Analogschalter IC2 wird von dem zweiten Referenzpotential U4 über die Diode D10 versorgt. Das Versorgungspotential U5 des Analogschalters IC2 ist gegenüber dem zweiten Referenzpotential U4 um eine Durchlassspannung der Diode D10 vermindert. Falls die Diode D10 eine Schottky-Diode ist, kann sie eine Durchlassspannung von z.B. 0,2 V aufweisen. Als Versorgungspotential U5 des Analogschalters IC2 ergibt sich in diesem Fall U5 = U4 - 0,2 V.

Das erste Referenzpotential U3 beträgt z.B. 3,3 V, und das zweite Referenzpotential U4 beträgt z.B. 5 V. Somit gilt U4 > U3. Daher gilt auch U5 > U2. Somit sperrt die Diode D9 in dem Normalbetrieb der Schaltung.

An der Reihenschaltung aus dem Widerstand R1 sowie den zwei in Durchlassrichtung angeordneten Dioden D6 und D7 liegt eine Spannung an, die sich als Potentialdifferenz zwischen dem höheren Versorgungspotential U2 des Komparators IC1 und dem niedrigeren Versorgungspotential GND E des Komparators IC1 ergibt. Über den Widerstand R1 sowie die Dioden D6 und D7 wird eine Spannung UT1 über den Dioden D6 und D7 so eingestellt, dass sie ca. 1,0 V beträgt. Diese Spannung UT1 liegt an einem positiven Eingang des Komparators IC1 an Auch bei einer Erhöhung der Spannung über den Widerstand R1 sowie die Dioden D6 und D7 bleibt die Spannung UT1 über den Dioden D6 und D7 und somit auch die an dem positiven Eingang des Komparators IC1 anliegende Eingangsspannung nahezu konstant, d.h. beträgt weiterhin ca. 1,0 V.

An der Reihenschaltung aus den Widerständen R2 und R3 liegt ebenfalls die sich als Potentialdifferenz zwischen dem höheren Versorgungspotential U2 des Komparators IC1 und dem niedrigeren Versorgungspotential GND E des Komparators IC1 ergebende Spannung an. Die Widerstände R2 und R3 bilden einen Spannungsteiler. Dieser ist so eingestellt, dass in dem Normalbetrieb der Schaltung eine Spannung UT2 von ca. 0,9 V an dem Widerstand R3 abfällt, die über den negativen Eingang des Komparators IC1 abgegriffen wird und daher die an dem negativen Eingang des Komparators IC1 anliegende Eingangsspannung darstellt.

Somit liegt in dem Normalbetrieb der Schaltung eine Eingangsspannung von ca. 1,0 V an dem positiven Eingang des Komparators IC1 und eine Eingangsspannung von ca. 0,9 V an dem negativen Eingang des Komparators IC1 an. Daher ist der positive Eingang des Komparators IC1 positiver als der negative Eingang. Dies bedeutet, dass der Ausgang des Komparators IC1 in eine positive Endlage fällt. Mit der dann an dem Ausgang des Komparators IC1 anliegenden Ausgangsspannung wird der Analogschalter IC2 geschlossen, d.h. freigeschaltet. Somit ist der Analogschalter IC2 geschlossen, und ein normaler Betrieb der Datenleitung Ltg. 1 ist gewährleistet.

Der Pull-Up-Widerstand R4 wird nur benötigt, wenn es sich bei dem Komparator IC1 um einen als Komparator verwendeten Operationsverstärker handelt und dieser keinen sogenannten Rail-to-Raii-Ausgang aufweist, d.h. keinen Ausgang, der bis zu dem höheren Versorgungspotential U2 des Komparators IC1 und dem niedrigeren Versorgungspotential GND E des Komparators IC1 aussteuerbar ist. Dann könnte in dem vorstehend beschriebenen Fall der positiven Endlage die an dem Ausgang des Komparators IC1 anliegende Ausgangsspannung zu niedrig sein und daher ein sicheres Schalten des Analogschalters IC2 nicht gewährleistet sein. Durch den Pull-Up-Widerstand R4 kann eine ausreichend hohe Ausgangsspannung erreicht werden.

Neben dem Pull-Up-Widerstand R4 kann auch ein zwischen dem positiven Eingang des Komparators IC1 und dem Ausgang des Komparators IC1 angeordneter Mitkopplungswiderstand vorhanden sein. Über den Mitkopplungswiderstand können Schwellwerte, bei denen die Ausgangsspannung des Komparators IC1 jeweils kippt, eingestellt werden. Somit fallen Ein- und Ausschaltschwellwert nicht zusammen, sondern sind um die sogenannte Schalthysterese gegeneinander versetzt. Dadurch kann vermieden werden, dass bei geringen Schwankungen der an dem positiven Eingang und dem negativen Eingang des Komparators IC1 anliegenden Eingangsspannungen die Ausgangsspannung des Komparators IC1 zu häufig und irregulär umschaltet.

Die Dioden D2, D4 und D5 sind für den Normalbetrieb der Schaltung nicht von Belang. Die Diode D3 gewährleistet die Anbindung an das Potential GND B der Masse-Leitung Ltg. 2.

In dem Fall einer positiven Überspannung auf der Datenleitung Ltg. 1 begrenzt der die selbstrückstellende Sicherung SI1 und die bidirektionale Suppressor-Diode D1 umfassende Spannungsbegrenzer in einem ersten Schritt die Überspannung auf beispielsweise ca. 7,5 V. Der Strom, der durch die bidirektionale Suppressor-Diode D1 fließt, wird durch die selbstrückstellende Sicherung SI1 begrenzt. Diese verhindert somit eine Zerstörung der bidirektionalen Suppressor-Diode D1.

Die mit der Datenleitung Ltg. 1 verbundene Diode D4 der Brückenschaltung wird leitend. Über sie wird das höhere Versorgungspotential U2 des Komparators IC1 angehoben. Infolgedessen ist das höhere Versorgungspotential U2 des Komparators IC1 größer als das erste Referenzpotential U3, d.h. es gilt U2 > U3. Daher sperrt die Diode D8 und trennt damit die normale Speisespannung in Form des ersten Referenzpotentials U3 von dem Komparator IC1 ab. Falls das um die Durchlassspannung der Diode D9 verminderte höhere Versorgungspotential U2 des Komparators IC1 größer als das zweite Referenzpotential U4 ist, d.h. U2 > (U4 + 0,2 V) gilt, sperrt auch die Diode D10 und trennt damit die normale Speisespannung in Form des zweiten Referenzpotentials U4 von dem Analogschalter IC2 ab. Somit können der Komparator IC1 und auch der Analogschalter IC2 von der positiven Überspannung versorgt werden.

Die an den Dioden D6 und D7 abfallende Spannung UT1 beträgt trotz der Anhebung des höheren Versorgungspotentials U2 des Komparators IC1 noch immer wie in dem Normalbetrieb der Schaltung ca. 1,0 V. Sie wird über den positiven Eingang des Komparators IC1 abgegriffen und stellt daher die an dem positiven Eingang des Komparators IC1 anliegende Eingangsspannung dar. Durch die Anhebung des höheren Versorgungspotentials U2 des Komparators IC1 liegt an dem Spannungsteiler mit den Widerständen R2 und R3 eine größere Spannung an. Somit ist auch die an dem Widerstand R3 abfallende Spannung UT2 größer und überschreitet die 1,0 V. Diese über den negativen Eingang des Komparators IC1 abgegriffene Spannung stellt die an dem negativen Eingang des Komparators IC1 anliegende Eingangsspannung dar.

Somit ist die an dem negativen Eingang des Komparators IC1 anliegende Eingangsspannung größer als die an dem positiven Eingang des Komparators IC1 anliegende Eingangsspannung. Dadurch wird ein Kippen des Ausgangs des Komparators IC1 in eine negative Endlage verursacht, d.h. der Spannungswert der an dem Ausgang des Komparators IC1 anliegenden Ausgangsspannung geht auf 0 V. Mit dieser Ausgangsspannung wird der Analogschalter IC2 geöffnet. Dadurch wird die nachfolgende elektronische Funktionseinheit IC3 von der positiven Überspannung abgekoppelt.

In dem Fall einer negativen Überspannung auf der Datenleitung Ltg. 1 begrenzt der die selbstrückstellende Sicherung SI1 und die bidirektionale Suppressor-Diode D1 umfassende Spannungsbegrenzer in einem ersten Schritt die Überspannung auf ca. 7,5 V. Der Strom, der durch die bidirektionale Suppressor-Diode D1 fließt, wird durch die selbstrückstellende Sicherung SI1 begrenzt. Diese verhindert somit eine Zerstörung der bidirektionalen Suppressor-Diode D1.

Die mit der Masse-Leitung Ltg. 2 verbundene Diode D5 der Brückenschaltung wird leitend. Über sie wird das höhere Versorgungspotential U2 des Komparators IC1 angehoben. Infolgedessen ist das höhere Versorgungspotential U2 des Komparators IC1 größer als das erste Referenzpotential U3, d.h. es gilt U2 > U3. Daher sperrt die Diode D8 und trennt damit die normale Speisespannung in Form des ersten Referenzpotentials U3 von dem Komparator IC1 ab. Falls das um die Durchlassspannung der Diode D9 verminderte höhere Versorgungspotential U2 des Komparators IC1 größer als das zweite Referenzpotential U4 ist, d.h. U2 > (U4 + 0,2 V) gilt, sperrt auch die Diode D10 und trennt damit die normale Speisespannung in Form des zweiten Referenzpotentials U4 von dem Analogschalter IC2 ab. Somit können der Komparator IC1 und auch der Analogschalter IC2 von der negativen Überspannung versorgt werden.

Die an den Dioden D6 und D7 abfallende Spannung UT1 beträgt trotz der Anhebung des höheren Versorgungspotentials U2 des Komparators IC1 noch immer wie in dem Normalbetrieb der Schaltung ca. 1,0 V. Sie wird über den positiven Eingang des Komparators IC1 abgegriffen und stellt daher die an dem positiven Eingang des Komparators IC1 anliegende Eingangsspannung dar. Durch die Anhebung des höheren Versorgungspotentials U2 des Komparators IC1 liegt an dem Spannungsteiler mit den Widerständen R2 und R3 eine größere Spannung an. Somit ist auch die an dem Widerstand R3 abfallende Spannung UT2 größer und überschreitet die 1,0 V. Diese über den negativen Eingang des Komparators IC1 abgegriffene Spannung stellt die an dem negativen Eingang des Komparators IC1 anliegende Eingangsspannung dar.

Somit ist die an dem negativen Eingang des Komparators IC1 anliegende Eingangsspannung größer als die an dem positiven Eingang des Komparators IC1 anliegende Eingangsspannung. Dadurch wird ein Kippen des Ausgangs des Komparators IC1 in die negative Endlage verursacht, d.h. der Spannungswert der an dem Ausgang des Komparators IC1 anliegenden Ausgangsspannung geht auf 0 V. Mit dieser Ausgangsspannung wird der Analogschalter IC2 geöffnet. Dadurch wird die nachfolgende elektronische Funktionseinheit IC3 von der positiven Überspannung abgekoppelt.

Die bidirektionale Suppressor-Diode D11 sorgt dafür, dass bei schnellen Überspannungs-Transienten die elektronische Funktionseinheit IC3 keinen Schaden nimmt, bis der die selbstrückstellende Sicherung SI1 und die bidirektionale Suppressor-Diode D1 umfassende Spannungsbegrenzer zur Geltung kommt.

Das Abschalten bzw. Öffnen des Analogschalters IC2 bei einem Auftreten einer Überspannung ist mit einer gewissen Schaltverzögerung behaftet. In dem Fall einer exemplarischen Versuchsschaltung betrug die Schaltverzögerung ca. 20 µs. Nach ausgiebigen Tests war jedoch festzustellen, dass diese Schaltverzögerung keinen negativen Einfluss auf die zu schützende elektronische Funktionseinheit IC3 hatte. Durch eine entsprechende Auswahl des Komparators IC1 bzw. als Komparator geschalteten Operationsverstärkers und eventuell des Analogschalters IC2 lässt sich das Schaltverhalten deutlich optimieren.

Die vorstehend beschriebene Schaltung arbeitet bei Versorgung und gänzlich ohne Versorgung sowie auch in einer Energiesparbetriebsart, da eine auftretende Fehlspannung bzw. Überspannung als Versorgungsspannung herangezogen werden kann. Dabei ist auch ein Dauerbetrieb möglich, d.h. ein Schutz gegen länger andauernde Überspannungen sichergestellt. Dadurch, dass dem Spannungsüberwacher die Brückenschaltung mit den vier Dioden D2, D3, D4 und D5 vorgeschaltet ist, ist auch bei einer negativen Überspannung ein sicherer Betrieb gewährleistet. Mit anderen Worten schützt die Schaltung vor positiver und negativer Überspannung, wobei es keine Rolle spielt, ob sie versorgt ist oder nicht. Sie kann z.B. für Überspannungen von maximal +/- 30 V ausgelegt sein.

Der Spannungsüberwacher spricht ab einer bestimmten Überspannung an und trennt mit Hilfe des Analogschalters IC2 die Überspannung von der zu schützenden elektronischen Funktionseinheit IC3 ab. In dem Normalbetrieb werden die Eigenschaften der Datenleitung Ltg. 1 nicht durch die Schaltung beeinflusst, d.h. ihre Bidirektionalität und ihre Niederohmigkeit bleiben erhalten. Dies wird durch die Verwendung der im Normalbetrieb niederohmigen selbstrückstellenden Sicherung SI1 und des Bidirektionalität und Niederohmigkeit gewährleistenden Analogschalters IC2 erreicht.

Zusammenfassend bezieht sich die vorliegende Erfindung auf eine Schaltung nach Anspruch 1 zum Schutz einer mit einer Datenleitung Ltg. 1 verbundenen elektronischen Funktionseinheit IC3 vor positiven und negativen Überspannungen. Die Schaltung weist einen vor der elektronischen Funktionseinheit IC3 in der Datenleitung Ltg. 1 angeordneten Analogschalter IC2 auf. Sie umfasst zudem einen Spannungsüberwacher, der zum Ansteuern des Analogschalters IC2 eingerichtet ist, wobei der Spannungsüberwacher zum Schließen des Analogschalters IC2, falls keine Überspannung auftritt, und zum Öffnen des Analogschalters IC2, falls eine Überspannung auftritt, eingerichtet ist. Die Schaltung funktioniert auch in einer Energiesparbetriebsart und/oder wenn keinerlei Versorgungsspannung angelegt ist. Dabei bleiben eine Niederohmigkeit und eine Bidirektionalität der Datenleitung Ltg. 1 erhalten.

## Patentansprüche

1. Schaltung zum Schutz einer mit einer bidirektionalen Datenleitung (Ltg. 1) verbundenen elektronischen Funktionseinheit (IC3) vor positiven und negativen Überspannungen, wobei als höheres Versorgungspotential der Funktionseinheit (IC3) ein erstes Referenzpotential (U3) dient, und wobei die Schaltung aufweist:
einen vor der elektronischen Funktionseinheit (IC3) in der bidirektionalen Datenleitung (Ltg. 1) angeordneten Analogschalter (IC2); und
einen Spannungsüberwacher, der zum Ansteuern des Analogschalters (IC2) eingerichtet ist, wobei der Spannungsüberwacher zum Schließen des Analogschalters (IC2), falls keine Überspannung auftritt, und zum Öffnen des Analogschalters (IC2), falls eine Überspannung auftritt, eingerichtet ist,
wobei der Spannungsüberwacher aufweist:
einen Komparator (IC1), der zum Ansteuern des Analogschalters (IC2) über eine Ausgangsspannung des Komparators eingerichtet ist, und
eine zwischen dem ersten Referenzpotential (U3) und einem höheren Versorgungspotential (U2) des Komparators (IC1) in Durchlassrichtung angeordnete Diode (D8), die zum Abtrennen des ersten Referenzpotentials (U3), falls eine Überspannung auftritt, eingerichtet ist.

2. Schaltung nach Anspruch 1, wobei der Spannungsüberwacher aufweist:
einen zwischen dem höheren Versorgungspotential (U2) des Komparators und einem Ausgang des Komparators angeordneten Pull-Up-Widerstand (R4) und/oder einen zwischen einem positiven Eingang des Komparators und dem Ausgang des Komparators angeordneten Mitkopplungs-widerstand.

3. Schaltung nach Anspruch 1, wobei der Spannungsüberwacher aufweist:
eine zwischen dem höheren Versorgungspotential (U2) des Komparators (IC1) und einem niedrigeren Versorgungspotential (GND E) des Komparators (IC1) angeordnete Reihenschaltung aus einem Widerstand (R1) und zumindest einer in Durchlassrichtung angeordneten Diode (D6, D7), wobei die Reihenschaltung zum Einstellen einer an einem positiven Eingang des Komparators anliegenden Eingangsspannung an einem Verbindungspunkt zwischen dem Widerstand (R1) und der zumindest einen Diode (D6, D7) eingerichtet ist.

4. Schaltung nach Anspruch 1, wobei der Spannungsüberwacher aufweist:
eine zwischen dem höheren Versorgungspotential (U2) des Komparators (IC1) und einem niedrigeren Versorgungspotential (GND E) des Komparators (IC1) angeordnete Reihenschaltung aus zwei Widerständen (R2, R3), die zum Einstellen einer an einem negativen Eingang des Komparators anlegenden Eingangsspannung an einem Verbindungspunkt zwischen den zwei Widerständen (R2, R3) eingerichtet ist.

5. Schaltung nach Anspruch 1, wobei die zwischen dem ersten Referenzpotential (U3) und dem höheren Versorgungspotential (U2) des Komparators (IC1) in Durchlassrichtung angeordnete Diode (D8) eine Schottky-Diode ist.

6. Schaltung nach Anspruch 1, wobei der Spannungsüberwacher aufweist:
eine zwischen einem zweiten Referenzpotential (U4) und einem Versorgungspotential (U5) des Analogschalters (IC2) in Durchlassrichtung angeordnete Diode (D10), die zum Abtrennen des zweiten Referenzpotentials (U4), falls eine Überspannung auftritt, eingerichtet ist.

7. Schaltung nach Anspruch 6, wobei die zwischen dem zweiten Referenzpotential (U4) und dem Versorgungspotential (U5) des Analogschalters (IC2) in Durchlassrichtung angeordnete Diode (D10) eine Schottky-Diode ist.

8. Schaltung nach Anspruch 1, wobei der Spannungsüberwacher aufweist:
eine zwischen dem höheren Versorgungspotential (U2) des Komparators (IC1) und einem Versorgungspotential (U5) des Analogschalters (IC2) in Durchlassrichtung angeordnete Diode (D9), die zum Trennen des höheren Versorgungspotentials (U2) des Komparators (IC1) und des Versorgungspotentials (U5) des Analogschalters (IC2), falls keine Überspannung auftritt, eingerichtet ist.

9. Schaltung nach Anspruch 8, wobei die zwischen dem höheren Versorgungspotential (U2) des Komparators (IC1) und dem Versorgungspotential (U5) des Analogschalters (IC2) angeordnete Diode (D9) eine Schottky-Diode ist.

10. Schaltung nach Anspruch 1, wobei die Schaltung aufweist:
eine vor dem Spannungsüberwacher angeordnete Brückenschaltung aus vier Dioden (D2, D3, D4, D5), die zum Gleichrichten einer Überspannung und zum Zuführen der gleichgerichteten Überspannung zu dem Spannungsüberwacher eingerichtet ist.

11. Schaltung nach Anspruch 10, wobei die vier Dioden (D2, D3, D4, D5) der Brückenschaltung Schottky-Dioden sind.

12. Schaltung nach Anspruch 1, wobei die Schaltung aufweist:
eine vor dem Analogschalter (IC2) zwischen der Datenleitung (Ltg. 1) und einer Masse-Leitung (Ltg. 2) angeordnete bidirektionale Suppressor-Diode (D1), die zum Begrenzen von positiven und negativen Überspannungen eingerichtet ist; und
eine vor einem Verbindungspunkt der Datenleitung (Ltg. 1) und der bidirektionalen Suppressor-Diode (D1) in der Datenleitung (Ltg. 1) angeordnete selbstrückstellende Sicherung (SI1), die zum Begrenzen eines durch die bidirektionale Suppressor-Diode (D1) fließenden Stroms eingerichtet ist.

13. Schaltung nach Anspruch 1, wobei die Schaltung aufweist:
eine zwischen dem höheren Versorgungspotential (U3) der elektronischen Funktionseinheit (IC3) und einem niedrigeren Versorgungspotential (GND E) der elektronischen Funktionseinheit (IC3) angeordnete bidirektionale Suppressor-Diode (D11), die zum Begrenzen von Überspannungs-Transienten bei der elektronischen Funktionseinheit (IC3) eingerichtet ist.

## Claims

1. A circuit for protecting an electronic functional unit (IC3) connected to a bidirectional data line (Ltg. 1) against positive and negative overvoltages, wherein a first reference potential (U3) is used as a higher supply potential of the functional unit (IC3), said circuit comprising:
an analogue switch (IC2) arranged upstream from the electronic functional unit (IC3) in the bidirectional data line (Ltg. 1); and
a voltage monitor configured to control the analogue switch (IC2), wherein the voltage monitor is configured to close the analogue switch (IC2) when there is no overvoltage and to open the analogue switch (IC2) when an overvoltage occurs,
said voltage monitor comprising:
a comparator (IC1) configured to control the analogue switch (IC2) via an output voltage of the comparator, and
a diode (D8) which is arranged in the forward direction between the first reference potential (U3) and a higher supply potential (U2) of the comparator (IC1) and which is configured to disconnect the first reference potential (U3) when an overvoltage occurs.

2. The circuit according to claim 1, wherein the voltage monitor comprises:
a pull-up resistor (R4) arranged between the higher supply potential (U2) of the comparator and an output of the comparator and/or a positive-feedback resistor arranged between a positive input of the comparator and the output of the comparator.

3. The circuit according to claim 1, wherein the voltage monitor comprises:
a series circuit arranged between the higher supply potential (U2) of the comparator (IC1) and a lower supply potential (GND E) of the comparator (IC1), comprising a resistor (R1) and at least one diode (D6, D7) arranged in the forward direction, wherein the series circuit is configured to adjust an input voltage applied to a positive input of the comparator at a connection point between the resistor (R1) and the at least one diode (D6, D7).

4. The circuit according to claim 1, wherein the voltage monitor comprises:
a series circuit which consists of two resistors (R2, R3) arranged between the higher supply potential (U2) of the comparator (IC1) and a lower supply potential (GND E) of the comparator (IC1) and which is configured to adjust an input voltage applied to a negative input of the comparator at a connection point between the two resistors (R2, R3).

5. The circuit according to claim 1, wherein the diode (D8) arranged in the forward direction between the first reference potential (U3) and the higher supply potential (U2) of the comparator (IC1) is a Schottky diode.

6. The circuit according to claim 1, wherein the voltage monitor comprises:
a diode (D10) which is arranged in the forward direction between a second reference potential (U4) and a supply potential (U5) of the analogue switch (IC2) and which is configured to disconnect the second reference potential (U4) when an overvoltage occurs.

7. The circuit according to claim 6, wherein the diode (D10) arranged in the forward direction between the second reference potential (U4) and the supply potential (U5) of the analogue switch (IC2) is a Schottky diode.

8. The circuit according to claim 1, wherein the voltage monitor comprises:
a diode (D9) which is arranged in the forward direction between the higher supply potential (U2) of the comparator (IC1) and a supply potential (U5) of the analogue switch (IC2) and which is configured to disconnect the higher supply potential (U2) of the comparator (IC1) and the supply potential (U5) of the analogue switch (IC2) when there is no overvoltage.

9. The circuit according to claim 8, wherein the diode (D8) arranged between the higher supply potential (U2) of the comparator (IC1) and the supply potential (U5) of the analogue switch (IC2) is a Schottky diode.

10. The circuit according to claim 1, comprising:
a bridge circuit which consists of four diodes (D2, D3, D4, D5) arranged upstream from the voltage monitor and which is configured to rectify an overvoltage and to supply the rectified overvoltage to the voltage monitor.

11. The circuit according to claim 10, wherein the four diodes (D2, D3, D4, D5) of the bridge circuit are Schottky diodes.

12. The circuit according to claim 1, comprising:
a bidirectional suppressor diode (D1) which is arranged upstream from the analogue switch (IC2) between the data line (Ltg. 1) and a ground line (Ltg. 2) and which is configured to limit positive and negative overvoltages; and
an automatic-reset fuse (SI1) which is arranged in the data line (Ltg. 1) upstream from a connection point of the data line (Ltg. 1) and the bidirectional suppressor diode (D1) and which is configured to limit a current flowing through the bidirectional suppressor diode (D1).

13. The circuit according to claim 1, comprising:
a bidirectional suppressor diode (D11) which is arranged between the higher supply potential (U3) of the electronic functional unit (IC3) and a lower supply potential (GND E) of the electronic functional unit (IC3) and which is configured to limit overvoltage transients in the electronic functional unit (IC3).

## Revendications

1. Circuit de protection, contre des surtensions positives et négatives, d'une unité fonctionnelle électronique (IC3) connectée à une ligne de données bidirectionnelle (Ltg. 1), dans lequel un premier potentiel de référence (U3) sert de plus haut potentiel d'alimentation de l'unité fonctionnelle (IC3), et dans lequel le circuit comprend:
un commutateur analogique (IC2) qui est disposé en amont de l'unité fonctionnelle électronique (IC3) sur la ligne de données bidirectionnelle (Ltg. 1); et
un contrôleur de tension qui est configuré pour commander le commutateur analogique (IC2), dans lequel le contrôleur de tension est configuré pour fermer le commutateur analogique (IC2) en l'absence de surtension, et pour ouvrir le commutateur analogique (IC2) en présence de surtension,
dans lequel le contrôleur de tension comprend:
un comparateur (IC1) qui est configuré pour commander le commutateur analogique (IC2) via une tension de sortie du comparateur; et
une diode (D8) qui est disposée dans le sens passant, entre le premier potentiel de référence (U3) et un plus haut potentiel d'alimentation (U2) du comparateur (IC1), et qui est configurée pour se déconnecter du premier potentiel de référence (U3) en présence de surtension.

2. Circuit selon la revendication 1, dans lequel le contrôleur de tension comprend:
une résistance pull-up de rappel vers le haut (R4) qui est disposée entre le plus haut potentiel d'alimentation (U2) du comparateur et une sortie du comparateur et / ou une résistance de rétroaction positive qui est disposée entre une entrée positive du comparateur et la sortie du comparateur.

3. Circuit selon la revendication 1, dans lequel le contrôleur de tension comprend:
un circuit série qui comporte une résistance (R1) et au moins une diode (D6, D7) disposée dans le sens passant, et qui est disposé entre le plus haut potentiel d'alimentation (U2) du comparateur (IC1) et un plus bas potentiel d'alimentation (GND E) du comparateur (IC1), dans lequel le circuit série est configuré pour régler une tension d'entrée appliquée à une entrée positive du comparateur, à un point de connexion entre la résistance (R1) et ladite au moins une diode (D6, D7).

4. Circuit selon la revendication 1, dans lequel le contrôleur de tension comprend:
un circuit série qui comporte deux résistances (R2, R3), qui est disposé entre le plus haut potentiel d'alimentation (U2) du comparateur (IC1) et un plus bas potentiel d'alimentation (GND E) du comparateur (IC1), et qui est configuré pour régler une tension d'entrée appliquée à une entrée négative du comparateur, à un point de connexion entre les deux résistances (R2, R3).

5. Circuit selon la revendication 1, dans lequel la diode (D8), qui est disposée dans le sens passant, entre le premier potentiel de référence (U3) et le plus haut potentiel d'alimentation (U2) du comparateur (IC1), est une diode Schottky.

6. Circuit selon la revendication 1, dans lequel le contrôleur de tension comprend:
une diode (D10) qui est disposée dans le sens passant, entre un deuxième potentiel de référence (U4) et un potentiel d'alimentation (U5) du commutateur analogique (IC2), et qui est configurée pour se déconnecter du deuxième potentiel de référence (U4) en présence de surtension.

7. Circuit selon la revendication 6, dans lequel la diode (D10), qui est disposée dans le sens passant, entre le deuxième potentiel de référence (U4) et le potentiel d'alimentation (U5) du commutateur analogique (IC2), est une diode Schottky.

8. Circuit selon la revendication 1, dans lequel le contrôleur de tension comprend:
une diode (D9) qui est disposée dans le sens passant, entre le plus haut potentiel d'alimentation (U2) du comparateur (IC1) et un potentiel d'alimentation (U5) du commutateur analogique (IC2), et qui est configurée pour se déconnecter du plus haut potentiel d'alimentation (U2) du comparateur (IC1) et du potentiel d'alimentation (U5) du commutateur analogique (IC2) en l'absence de surtension.

9. Circuit selon la revendication 8, dans lequel la diode (D9), qui est disposée entre le plus haut potentiel d'alimentation (U2) du comparateur (IC1) et le potentiel d'alimentation (U5) du commutateur analogique (IC2), est une diode Schottky.

10. Circuit selon la revendication 1, dans lequel le circuit comprend:
un montage en pont qui comporte quatre diodes (D2, D3, D4, D5), qui est disposé en amont du contrôleur de tension, et qui est configuré pour redresser une surtension et pour fournir la surtension redressée au contrôleur de tension.

11. Circuit selon la revendication 10, dans lequel les quatre diodes (D2, D3, D4, D5) du montage en pont sont des diodes Schottky.

12. Circuit selon la revendication 1, dans lequel le circuit comprend:
une diode de suppression bidirectionnelle (D1) qui est disposée en amont du commutateur analogique (IC2) entre la ligne de données (Ltg. 1) et une ligne de masse (Ltg. 2), et qui est configurée pour limiter des surtensions positives et négatives; et
un fusible à réarmement automatique (SI1) qui est disposé en amont d'un point de connexion de la ligne de données (Ltg. 1) et de la diode de suppression bidirectionnelle (D1) dans la ligne de données (Ltg. 1), et qui est configuré pour limiter le courant circulant à travers la diode de suppression bidirectionnelle (D1).

13. Circuit selon la revendication 1, dans lequel le circuit comprend:
une diode de suppression bidirectionnelle (D11) qui est disposée entre le plus haut potentiel d'alimentation (U3) de l'unité fonctionnelle électronique (IC3) et un plus bas potentiel d'alimentation (GND E) de l'unité fonctionnelle électronique (IC3), et qui est configurée pour limiter des surtensions transitoires au sein de l'unité fonctionnelle électronique (IC3).
